# EUROPÄISCHE PATENTSCHRIFT

(11) **EP 3 717 716 B1**
(45) Veröffentlichungstag und Bekanntmachung des Hinweises auf die Patenterteilung: **02.10.2024**
(21) Anmeldenummer: 18822272.3
(22) Anmeldetag: 28.11.2018
(51) Int. Cl.: E04G 21/04, B23K 31/02, E02F 3/38, B23K 101/18, B23K 101/28

(54) **KRÖPFUNG MIT GEKANTETEM SCHOTTBLECH**
CRANKED CONFIGURATION COMPRISING FOLDED PARTITION PLATE
COUDE COMPORTANT UNE TÔLE DE CLOISONNEMENT REPLIÉE

(30) Priorität: 28.11.2017 DE 102017128174
(43) Veröffentlichungstag der Anmeldung: 07.10.2020
(73) Patentinhaber: Schwing GmbH, 44653 Herne (DE)
(72) Erfinder: JASNIEWICZ, Thomas, 58089 Hagen (DE); SEGSCHNEIDER, Bernd, 44227 Dortmund (DE); CHEN, Zhiming, 40477 Düsseldorf (DE)
(74) Vertreter: Schneiders & Behrendt Bochum
(86) Internationale Anmeldenummer: PCT/EP2018/082791
(87) Internationale Veröffentlichungsnummer: WO 2019/105981

(56) Entgegenhaltungen:
- DE-B- 1 025 737
- JP-A- S5 813 836
- JP-A- S5 862 226

## Beschreibung

Die Erfindung betrifft einen Großmanipulator, insbesondere eine Autobetonpumpe, mit einer Blechanordnung mit einem Obergurt, einem Untergurt und mindestens zwei seitlichen Stegblechen, wobei der Obergurt und der Untergurt zusammen mit den Stegblechen eine hohle Struktur ausbilden, sowie eine Rahmenabstützung für einen Großmanipulator mit einer solchen Blechanordnung, einen Knickmast für einen Großmanipulator mit einer solchen Blechanordnung. Außerdem betrifft die Erfindung ein Verfahren zur Herstellung eines Großmanipulators mit einer solchen Blechanordnung.

Die DE 10 25 737 B betrifft einen Kastenträger für ein Fahrzeug, während die JP S58 13836 A und die JP S58 62226 A jeweils Baggerarme beschreiben.

Großmanipulatoren mit Blechanordnungen der zuvor genannten Art werden regelmäßig mit Schottwänden in hohlen Strukturen, z.B. bei der Rahmenabstützung oder dem Knickmast einer Autobetonpumpe, verstärkt. Allerdings ist die Herstellung solcher Schottwände in einer hohlen Struktur nicht ganz einfach. Insbesondere das Einschweißen von Schottwandblechen kann recht aufwendig sein. Die EP 2 935 081 B1 schlägt vor, die Schottwandbleche mit Schweißlaschen zum Längsschweißen zu versehen und in den Gurten Ausnehmungen vorzusehen, um die Schweißlaschen entlang dieser Ausnehmungen mit den Stegblechen zu verschweißen. Hierdurch können Querschweißnähte, die eine hohe Kerbwirkung auf die Gurte haben, vermieden werden. Die Herstellung dieser Schottwandbleche und dieser Gurte ist durch die Schweißlaschen und die Ausnehmung sehr aufwendig, da unter anderem sehr präzise Blechzuschnitte erforderlich sind. Außerdem ist der Montageaufwand solcher Blechanordnungen erheblich und die Schottbleche können nicht vollumfänglich mit den Gurt-/Stegblechen verschweißt werden. Insbesondere bei Knickmasten und Rahmenabstützungen für Großmanipulatoren sind durch Schottwände verstärkte Blechanordnungen aufgrund der hohen Biege- und Torsionsmomente erforderlich. Die Erfindung bezieht sich auch auf einen solchen Großmanipulator mit aufgebauter Betonpumpe, wobei der Knickmast als Verteilermast dient, welcher eine Betonförderleitung trägt, um den von der Betonpumpe geförderten Beton zu verteilen. In der Regel müssen leistungsfähige Fahrzeuge der hier in Rede stehenden Art mit weit ausladenden Knickmasten versehen werden. Solche Knickmasten erreichen beträchtliche Höhen und lösen ein von der Ausladung, der Länge und des Gewichtes des Knickmastes, aber auch von am Aufstellort herrschenden Windverhältnissen abhängiges Moment aus. Bei der Auslegung solcher Knickmasten sind diese Bedingungen zu berücksichtigen und die Mastsegmente eines solchen Knickmastes sind ausreichend steif und dennoch möglichst leicht zu konstruieren. Außerdem muss das von dem Knickmast ausgelöste Moment über eine Rahmenabstützung auf den Untergrund abgestützt werden, damit ein als Autobetonpumpe ausgebildeter Großmanipulator nicht aufgrund des ausladenden Mastes umkippt. Hierfür muss eine in Rede stehende Abstützung stabile ein- und ausziehbare Träger aufweisen, die das vom Mast ausgelöste Kippmoment auf den Untergrund am Aufstellort abtragen. Die Träger solcher Rahmenabstützungen sind in der Regel aus zwei seitlich angeordneten Stegblechen sowie einem Obergurt und einem Untergurt gebildet und werden regelmäßig mit Schottwänden in der hohlen Struktur verstärkt. Auch hier ist die Verstärkung der hohlen Strukturen oft sehr aufwendig und kompliziert. Die Entwicklung derartiger Großmanipulatoren unterliegt dem Zwang, wegen der wachsenden Anforderungen, ständig steigende Mastlängen und Reichweiten sowie größere Abstützweiten und stabilere Träger an den Rahmenabstützungen vorzusehen.

Es ist daher Aufgabe der Erfindung, einen Großmanipulator mit einer stabilen Blechanordnung anzugeben, die sich einfach herstellen lässt. Insbesondere soll die Verstärkung der hohlen Struktur einer solchen Blechanordnung durch Schottwände vereinfacht werden. Außerdem soll eine verbesserte Rahmenabstützung und ein verbesserter Knickmast mit einer solchen Blechanordnung für einen Großmanipulator bereitgestellt werden. Weiterhin ist es Aufgabe der Erfindung ein Verfahren anzugeben, mit dem sich eine stabile Blechanordnung für einen Großmanipulator einfach herstellen lässt.

Gelöst wird diese Aufgabe durch einen Großmanipulator mit einer Blechanordnung mit den Merkmalen des Anspruchs 1 sowie eine Rahmenabstützung mit einer solchen Blechanordnung gemäß Anspruch 7 sowie einen Knickmast mit einer solchen Blechanordnung gemäß Anspruch 8. Außerdem wird die Aufgabe gelöst durch ein Verfahren zur Herstellung einer Blechanordnung für einen solchen Großmanipulator gemäß Anspruch 9.

Dadurch, dass zwei der Stegbleche einfach abgekantet sind, wobei die hierdurch gebildeten Abkantungen der Stegbleche in der hohlen Struktur jeweils eine Schottwand ausbilden und ein weiteres Stegblech doppelt abgekantet ist, wobei die hierdurch gebildeten Abkantungen des weiteren Stegbleches in der hohlen Struktur jeweils eine Schottwand ausbilden, wobei die hohle Struktur durch ein gegenüberliegendes Stegblech gebildet ist, dessen Stegblechrückwand mit den Abkantungen der abgekanteten Stegbleche verbunden ist, wobei mit Stegblechdeckeln die Bereiche zwischen den abgekanteten Stegblechen, welche in die Schottwände übergehen, verschlossen sind, um die hohle Struktur zu erhalten, wobei die Stegblechdeckel auf den abgekanteten Stegblechen angeordnet und mit diesen und/oder dem Obergurt und dem Untergurt verschweißt sind, um die hohle Struktur abzuschließen, kann eine einfach herzustellende Blechanordnung für einen Großmanipulator geschaffen werden, die eine stabile Verstärkung durch eine in der hohlen Struktur gebildete Schottwand bietet. Eine solche Blechanordnung bietet die Möglichkeit, hohe Biege- und Torsionsmomente aufzunehmen, ohne dass die Blechanordnung übermäßig schwer wird und damit nur bedingt einsatzfähig ist.

Dadurch, dass die Stegbleche abgekantet, also umgebogen, ist lässt sich eine Schottwand durch einfache Verformung der Stegbleche durch die gebildete Abkantung herstellen. Die Schottwand bildende Abkantung stellt somit einfach eine abgeknickte Verlängerung des abgekanteten Stegbleches dar. Auch nach Anordnung des Obergurtes auf den abgekanteten Stegblechen ist die Anbringung von Schweißnähten zur Verbindung des Untergurtes mit den Abkantungen der abgekanteten Stegbleche möglich. Nach dem Verschweißen der Abkantungen mit dem Obergurt und dem Untergurt können die Schweißnähte sehr einfach nachbearbeitet, also beispielsweise abgeschliffen oder abgefräst werden.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die mindestens eine Abkantung mittels Schweißnähten mit dem Obergurt und dem Untergurt verbunden ist. Die Verbindung der Abkantung mit dem Ober- und dem Untergurt stellt sicher, dass die über die Abkantung gebildete Schottwand Biege- und Torsionskräften von dem Ober- und Untergurt aufnehmen kann. Die hier gebildeten Schweißnähte verlaufen quer zur Längserstreckung der Ober- und Untergurte. Mit diesen Schweißnähten lässt sich die durch die Abkantung gebildete Schottwand einfach mit dem Ober- und Untergurt verbinden. Dadurch, dass durch die Abkantung ein Radius zwischen dem Stegblech und dem Schottblech entsteht, können die zwischen dem Steg- /Schottblech und dem Ober- und Untergurt wirkenden Kräfte sanft, ohne starke lokale Kerbwirkung, innerhalb der Blechanordnung übertragen werden. Wenn Steg- und Schottbleche im Gegensatz dazu rechtwinklig zueinander stehend miteinander verschweißt wären, würde eine starke Kerbwirkung in diesem Bereich zu starken lokalen, nicht tolerierbaren, Spannungen führen.

Eine besonders vorteilhafte Ausführung der Erfindung sieht vor, dass die Schweißnähte nachbearbeitet sind. Mit der Nachbearbeitung der Schweißnähte zwischen Abkantung und Ober- und Untergurt kann die Kerbwirkung der Schweißnähte auf den Ober- und Untergurt deutlich reduziert werden. Die Nachbearbeitung der Schweißnähte sieht vorzugsweise ein Abschleifen oder Abfräsen der Schweißnähte vor, um eine abgerundete, vorzugsweise konvexe, Kontur zu erhalten Die durch diese Konstruktion mögliche Nachbearbeitung der Schweißnaht ist deshalb ein wichtiges Konstruktionsmerkmal der erfindungsgemäßen Blechanordnung.

Von besonderem Vorteil ist gemäß einer Ausgestaltung, dass die mindestens eine Abkantung des einen Stegbleches mittels mindestens einer Schweißnaht mit dem gegenüberliegenden Stegblech verbunden ist. Die Verbindung der Abkantung des einen Stegbleches mit dem gegenüberliegenden Stegblech bildet eine Schottwand, die besonders zuverlässig auf die Blechanordnung wirkende Biege- und Torsionskräfte aufnehmen kann. Die Verbindung der Abkantung mit dem gegenüberliegenden Stegblech über eine Schweißnaht lässt sich zudem einfach herstellen. Die hier gebildete Schweißnaht verläuft quer zur Längserstreckung des Stegbleches.

Besonders vorteilhaft ist eine Ausführungsform, bei der die mindestens eine Schweißnaht nachbearbeitet ist. Mit der Nachbearbeitung der Schweißnaht zwischen Abkantung und verschweißtem Stegblech kann die Kerbwirkung der Schweißnaht auf das Stegblech deutlich reduziert werden. Die Nachbearbeitung der Schweißnaht sieht vorzugsweise ein Ausschleifen oder Abfräsen der Schweißnaht vor, um eine abgerundete Kontur zu erhalten.

Eine besonders vorteilhafte Ausführungsform der Erfindung sieht vor, dass der Obergurt, der Untergurt und die seitlichen Stegbleche eine Kröpfung ausbilden. Besonders abgekröpfte Blechanordnungen erfordern eine einfache und stabile Verstärkung durch in der hohlen Struktur gebildete Schottwände. Die vereinfachte Anordnung der Schottwand und die Stabilität der durch die Abkantung gebildeten Schottwand macht es möglich, gegenüber hohen Biege- und Torsionskräften sehr widerstandfähige Blechanordnungen mit Kröpfungen vorzusehen.

Ferner ist ein Großmanipulator mit einer Rahmenabstützung offenbart, die in das Fahrzeugprofil ein- und ausziehbare, vorzugsweise bogenförmige, Träger und / oder klappbare Träger aufweist, wobei die Träger eine Blechanordnung der zuvor beschriebenen Art aufweisen. Die zuvor in Bezug auf die Blechanordnung offenbarten Merkmale können einzeln oder in Kombination auch bei der Rahmenabstützung vorgesehen sein. Die zu der Blechanordnung des Großmanipulators bereits und im Folgenden näher beschriebenen Merkmale beziehen sich somit auch auf eine Blechanordnung in einem Träger einer bereits und im Folgenden näher beschriebenen Rahmenabstützung. Mit einer solchen Blechanordnung in einem Träger der Rahmenabstützung kann eine stabile und einfach herzustellende Rahmenabstützung geschaffen werden, die eine zuverlässige Abstützung eines Großmanipulators ermöglicht.

Ferner ist ein Großmanipulator mit einem Knickmast mit einer Mehrzahl von Mastsegmenten offenbart, wobei die Mastsegmente an Knickgelenken jeweils um Knickachsen gegenüber einem benachbarten Mastsegment oder einem Drehschemel verschwenkbar sind, mit mindestens einem Mastsegment mit einer Blechanordnung der zuvor beschriebenen Art aufweisen. Die zuvor in Bezug auf die Blechanordnung offenbarten Merkmale können einzeln oder in Kombination auch bei dem Knickmast vorgesehen sein. Die zu der Blechanordnung des Großmanipulators bereits und im Folgenden näher beschriebenen Merkmale beziehen sich somit auch auf eine Blechanordnung in einem Mastsegment eines bereits und im Folgenden näher beschriebenen Knickmastes. Mit der Anordnung einer solchen Blechanordnung in einem Mastsegment des Knickmastes kann ein stabiler, leichter und einfach herzustellender Knickmast geschaffen werden, der hohe Reichweiten und Ausfalthöhen ermöglicht.

Ferner ist ein Verfahren zur Herstellung eines zuvor und im Folgenden näher beschriebenen Großmanipulators mit einer Blechanordnung offenbart, umfassend folgende Schritte:
- Anordnung von einem Obergurt und einem Untergurt auf zwei einfach abgekanteten Stegblechen und einem weiteren doppelt abgekanteten Stegblech, sodass die gebildeten Abkantungen der Stegbleche jeweils eine Schottwand ausbilden,
- Verschweißen der Abkantungen mit dem Obergurt und dem Untergurt,
- Anordnung mindestens einer Stegblechrückwand,
- Verschweißen der Abkantungen mit der Stegblechrückwand,
- Anordnung Stegblechdeckeln, und
- Verschweißen der Stegblechdeckel mit den abgekanteten Stegblechen und / oder mit dem Obergurt und dem Untergurt.

Nach der Anordnung von Obergurt und Untergurt auf den abgekanteten Stegblechen können die Stegbleche einfach mit dem Obergurt und dem Untergurt verschweißt werden. Die die Schottwand bildenden Abkantungen können nach Anordnung des Obergurts und des Untergurts sehr einfach mit dem Obergurt und dem Untergurt verschweißt werden. Schweißstöße der miteinander zu verschweißenden Teile sind sehr einfach zugänglich, sodass Schweißnähte in hervorragender Qualität einfach realisierbar sind. Hierdurch lässt sich eine stabile Verbindung der Schottwand mit dem Obergurt und dem Untergurt einfach herstellen. Nach der Verschweißung der Abkantung mit dem Ober- und dem Untergurt kann ein Stegblech mit seiner Stegblechrückwand an den Abkantungen angeordnet werden. Die abgekanteten Stegbleche und das an den Abkantungen angeordnete Stegblech bilden zusammen mit dem Obergurt und dem Untergurt eine hohle Struktur aus. Das mit der Stegblechrückwand an der Abkantung des anderen Stegbleches angeordnete Stegblech wird mit den Abkantungen und dem Obergurt und dem Untergurt verschweißt. Die hier gebildeten Schweißstöße der miteinander zu verschweißenden Teile sind sehr einfach zugänglich, sodass Schweißnähte in hervorragender Qualität einfach realisierbar sind. Anschließend werden Stegblechdeckel angeordnet, die den Zugang verdecken und die hohle Struktur der Blechanordnung abschließen. Hierzu werden die Stegblechdeckel mit den abgekanteten Stegblechen und dem Obergurt sowie dem Untergurt verschweißt. Hierdurch wird auf einfache Weise eine allseitig durch Schweißnähte geschlossene Blechanordnung geschaffen, die Schottwände in der hohlen Struktur bildet. Diese einfach hergestellten Schottwände ermöglichen, dass die Blechanordnung hohe Biegemomente und Torsionsmomente aufnehmen kann. Die Blechzuschnitte der Blechanordnung sind zudem einfach herzustellen und lassen sich über einfache Schweißnähte zuverlässig verschweißen.

Besonders vorteilhaft ist eine Ausgestaltung des Verfahrens, bei der nach dem Verschweißen der Abkantung mit dem Obergurt und dem Untergurt und vor dem Anordnen der Stegblechrückwand eine Nachbearbeitung der Obergurt und Untergurt mit der Abkantung verbindenden Schweißnähte erfolgt. Vor der Anordnung der Stegblechrückwand sind die Obergurt und Untergurt mit der Abkantung verbindenden Schweißnähte einfach zugänglich und können sehr leicht nachbearbeitet werden. Hierdurch lässt sich die Kerbwirkung der Schweißnähte auf den Obergurt und den Untergurt reduzieren. Die Nachbearbeitung der Schweißnähte sieht vorzugsweise ein Abschleifen oder Abfräsen der Schweißnähte vor, um eine abgerundete Kontur zu erhalten.

Besonders vorteilhaft ist die Weiterentwicklung des Verfahrens, dass nach dem Verschweißen der Abkantung mit der Stegblechrückwand und vor dem Anordnen des Stegblechdeckels eine Nachbearbeitung der die Stegblechrückwand mit der Abkantung verbindenden Schweißnaht erfolgt. Vor der Anordnung des Stegblechdeckels ist die die Stegblechrückwand mit der Abkantung verbindende Schweißnaht einfach zugänglich und kann sehr leicht nachbearbeitet werden. Hierdurch lässt sich die Kerbwirkung der Schweißnaht auf das der Abkantung mit der Rückwand zugewandte Stegblech reduzieren. Die Nachbearbeitung der Schweißnaht sieht vorzugsweise ein Abschleifen oder Abfräsen der Schweißnaht vor, um eine abgerundete Kontur zu erhalten.

Weitere Merkmale, Einzelheiten und Vorteile der Erfindung ergeben sich aufgrund der nachfolgenden Beschreibung sowie anhand der Zeichnungen. Ein Ausführungsbeispiel der Erfindung ist in den folgenden Zeichnungen rein schematisch dargestellt und wird nachfolgend näher beschrieben. Einander entsprechende Gegenstände sind in allen Figuren mit den gleichen Bezugszeichen versehen. Es zeigen:
- Figur 1: erfindungsgemäßer Großmanipulator,
- Figur 2: Mastsegment des Knickmastes,
- Figur 3: Kröpfung am Mastsegment,
- Figur 4: Schnittansicht der Kröpfung,
- Figur 5: Detailansicht zu Blechanordnung,
- Figur 6: offen dargestellte Blechanordnung,
- Figur 7: Explosionszeichnung der Blechanordnung,
- Figur 8: Untergurt mit abgekanteten Stegblechen,
- Figur 9: Ober- und Untergurt mit abgekanteten Stegblechen,
- Figur 10: Ober- und Untergurt mit abgekanteten Stegblechen und Stegblechrückwand,
- Figur 11: Blechanordnung mit Stegblechdeckeln,
- Figur 12: Detailschnittansicht zu Blechanordnung,
- Figur 13: Seitenansicht zu offen dargestellter Blechanordnung,
- Figur 14: Schnittdarstellung zu Doppelschweißnaht,
- Figur 15: Schnittdarstellung zu nachbearbeiteter Doppelschwei ßnaht,
- Figur 16: Seitenansicht zu doppelt abgekantetem Stegblech,
- Figur 17: nicht erfindungsgemäße Blechanordnung mit einfacher Schottwand in erster Ausführung,
- Figur 18: Blechanordnung mit doppelter Schottwand,
- Figur 19: nicht erfindungsgemäße Blechanordnung mit einfacher Schottwand in zweiter Ausführung und
- Figur 20: nicht erfindungsgemäße Blechanordnung mit einfacher Schottwand in dritter Ausführung.

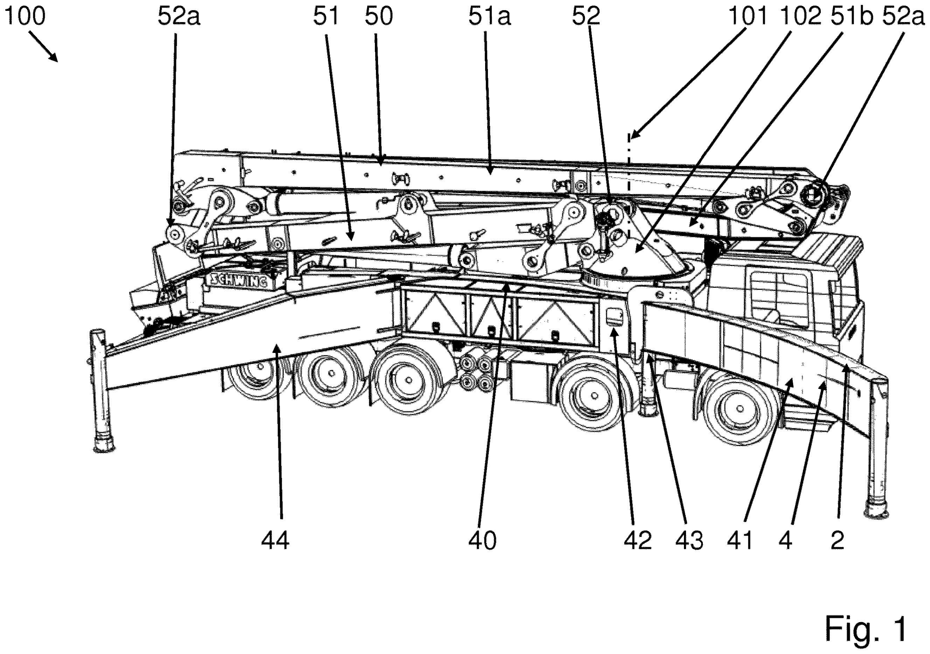

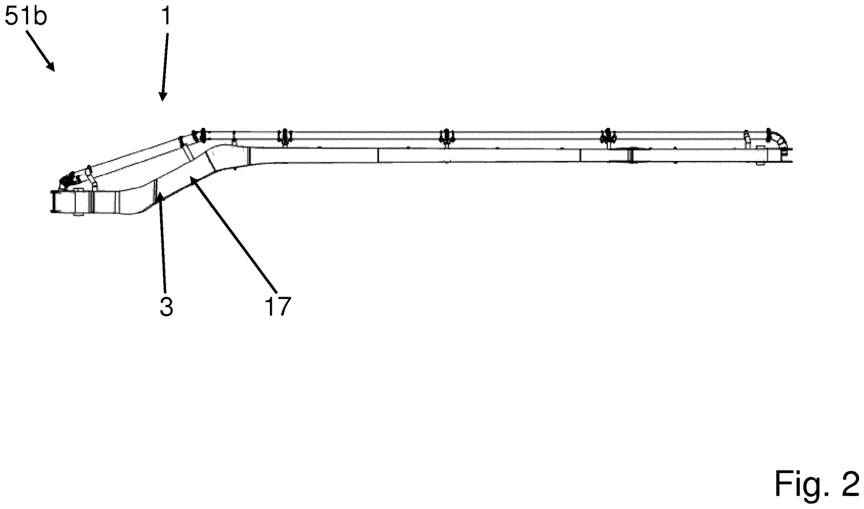

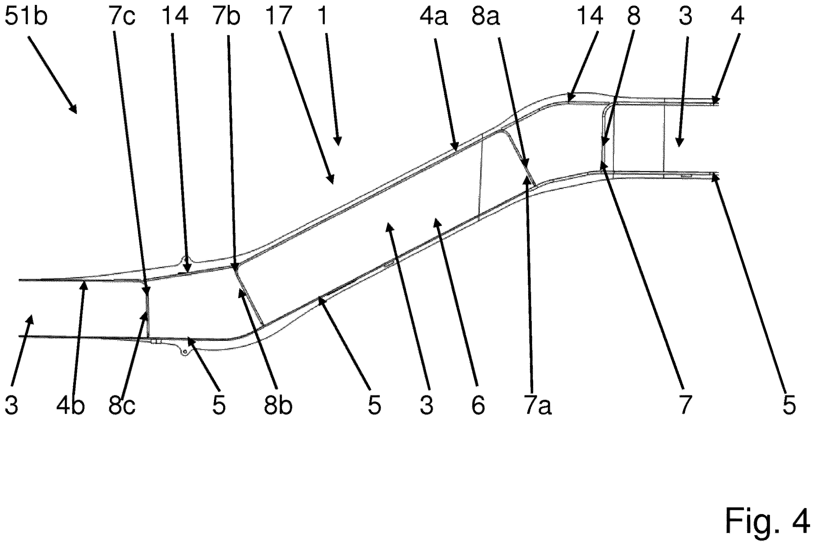

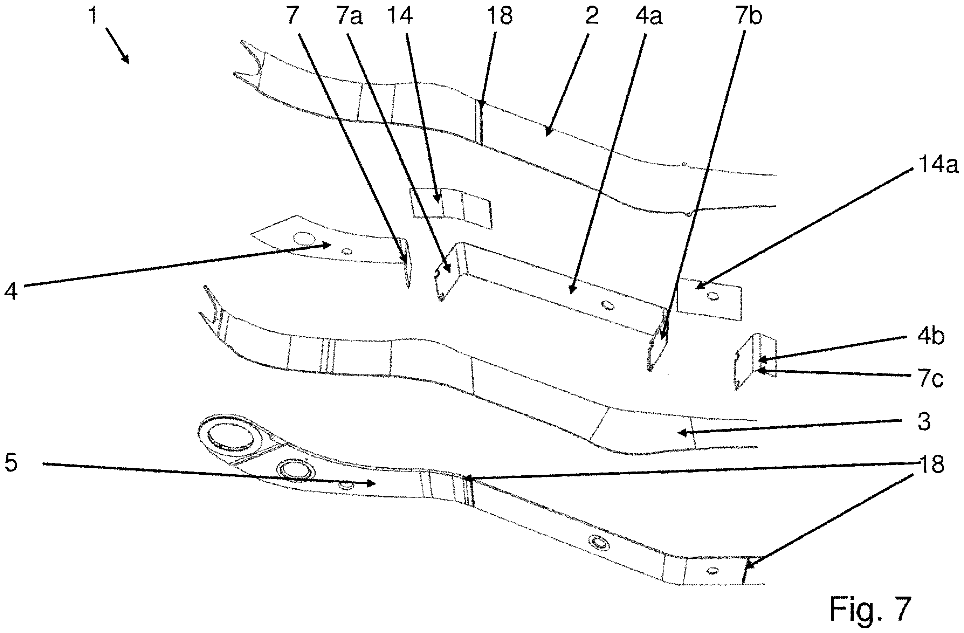

In den Figuren mit dem Bezugszeichen 100 bezeichnet ist ein erfindungsgemäßer Großmanipulator schematisch dargestellt. Das Bezugszeichen 50 bezeichnet einen erfindungsgemäßen Knickmast, während das Bezugszeichen 40 eine erfindungsgemäße Rahmenabstützung bezeichnet. Der in Figur 1 gezeigte Großmanipulator 100 ist nach Art einer Autobetonpumpe aufgebaut. Der Großmanipulator 100 verfügt über einen Drehschemel 102 der drehbar um eine Hochachse 101 auf dem Fahrzeuggestell des Großmanipulators 100 angeordnet ist. Auf dem Drehschemel 102 aufgebaut ist ein zusammengefaltet dargestellter Knickmast 50 gezeigt. Die drei sichtbaren Mastsegmente 51, 51a, 51b sind über Knickgelenke 52, 52a, 52b jeweils um Knickachsen gegenüber dem benachbarten Mastsegment 51, 51a, 51b oder dem Drehschemel 102 verschwenkbar. Hierzu sind zwischen dem Drehschemel 102 und dem ersten Mastsegment 51 sowie zwischen den Mastsegmenten 51, 51a, 51b jeweils Hydraulikzylinder angeordnet, die über Hebelgetriebe eine Verschwenkung der Mastsegmente 51, 51a, 51b gegeneinander sowie des ersten Mastsegmentes 51 gegenüber dem Drehschemel 102 ermöglichen. Die Rahmenabstützung 40 weist in das Fahrzeugprofil einziehbare und/ oder aus dem Fahrzeugprofil ausziehbare bogenförmige Träger 41 auf, wobei die Träger 41 jeweils an einem fahrzeugfesten Ausschubabschnitt 42 geführt sind. Die Träger bilden hierdurch mit den Ausschubabschnitten 42 ein Teleskop 43. Die Träger 41 sind aus einer Blechanordnung 1 gebildet, die einen Obergurt 2 und ein Untergurt 3 und mindestens zwei seitliche Stegbleche 4 aufweist. Der Obergurt 2 und Untergurt 3 bilden zusammen mit den Stegblechen 4 eine hohle Struktur aus. Auch die gezeigten Mastsegmente 51, 51a, 51b sind aus einer Blechanordnung 1 (Fig. 2) gebildet, die einen Obergurt 2 (Fig. 7) und einen Untergurt 3 (Fig. 2) sowie zwei seitliche Stegbleche 4, 4a, 4b, 5 (Fig. 4) aufweist. Ferner weist der Großmanipulator 100 an- und abklappbare Träger 44 mit der erfindungsgemäßen Blechanordnung 1 auf.

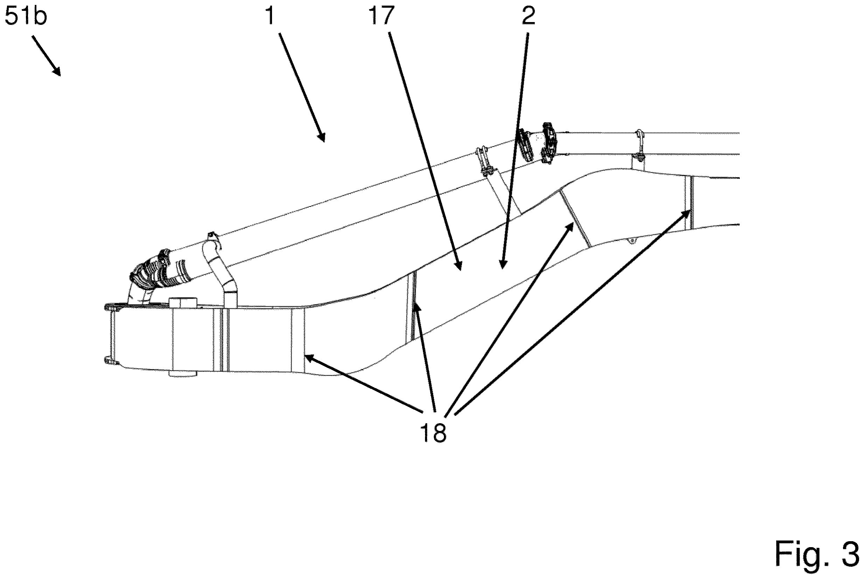

Aus Figur 2 geht das dritte Mastsegment 51b des Knickmastes 50 gemäß Figur 1 hervor. In der hier dargestellten Draufsicht ist zu erkennen, dass das Mastsegment 51b eine Kröpfung 17 aufweist. Diese Kröpfung 17 ist in Figur 3 ebenfalls gut zu erkennen.

Die Figur 3 zeigt die Kröpfung 18 am Mastsegment 51b gemäß Figur 2 in einem detaillierteren Ausschnitt. Der Obergurt 2, der die Kröpfung 17 nach oben abschließt, ist, wie anhand der dargestellten Blechdickensprünge 18 sichtbar, aus miteinander verschweißten Blechen unterschiedlicher Dicke zusammengesetzt um den Obergurt 2 gewichtstechnisch optimal an die lokale Belastung anzupassen.

In Figur 4 ist der aus Figur 3 gezeigte Bereich des Mastsegmentes 51b an der Kröpfung 17 aufgeschnitten dargestellt. Die Schnittebene verläuft hier durch die Stegbleche 4, 4a, 4b, 5 und ermöglicht einen Blick auf den dahinter angeordneten Untergurt 3. Damit ermöglicht die Schnittdarstellung einen Blick in die hohle Struktur 6 der Blechanordnung 1. Zu erkennen ist, dass die Stegbleche 4, 4a, 4b abgekantet sind und die hierdurch gebildeten Abkantungen 7, 7a, 7b, 7c der Stegbleche 4, 4a, 4b in der hohlen Struktur 6 Schottwände 8, 8a, 8b, 8c ausbilden. Während die Stegbleche 4, 4b in dem gezeigten Ausschnitt einfach abgekantet sind und jeweils eine Schottwand 8, 8c ausbilden, ist das Stegblech 4a doppelt abgekantet und bildet hierdurch zwei Schottwände 8a, 8b in der hohlen Struktur 6 aus. Neben den abgekanteten Stegblechen 4, 4a, 4b ist die hohle Struktur 6 durch ein zweites Stegblech 5 gebildet, dessen Stegblechrückwand mit den Abkantungen 7, 7a, 7b, 7c der abgekanteten Stegbleche 4, 4a, 4b verbunden ist. Um die hohle Struktur 6 abzuschließen sind Stegblechdeckel 14 auf den abgekanteten Stegblechen 4, 4a, 4b angeordnet und mit diesen sowie dem Ober- und dem Untergurt 2, 3 verschweißt. Hierdurch ist eine geschlossene hohle Struktur 6 gegeben, in der einfach Schottwände 8, 8a, 8b, 8c durch Abkantungen 7, 7a, 7b, 7c von abgekanteten Stegblechen 4, 4a, 4b gebildet sind.

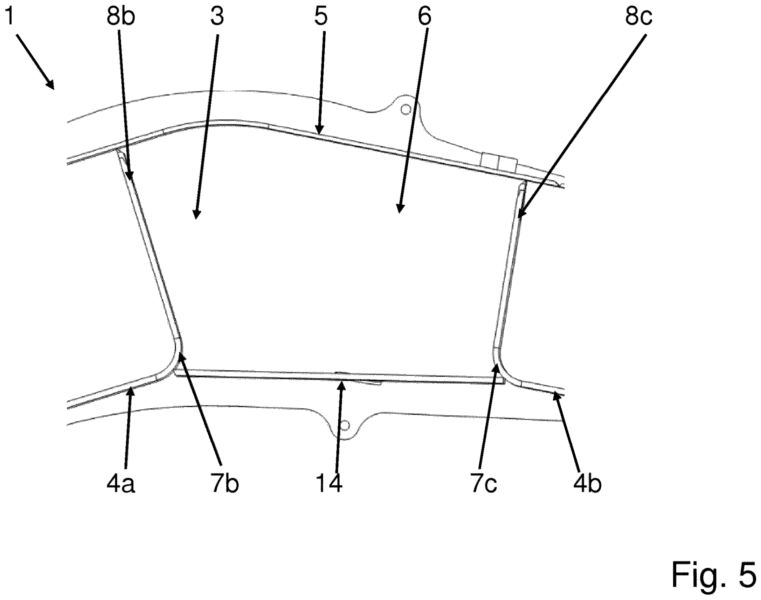

Die Figur 5 zeigt eine Detailansicht zu der in Figur 4 gezeigten Blechanordnung 1. In dieser Schnittdarstellung ist zu erkennen, wie die Stegbleche 4a, 4b abgekantet sind, indem sie in Richtung der gebildeten hohlen Struktur 6 gebogen sind. Die hierdurch gebildeten Abkantungen 7b, 7c bilden Schottwände 8b, 8c in der hohlen Struktur 6. Es ist zu erkennen, dass diese Schottwände 8b, 8c als Verlängerungen der gebogenen Stegbleche 4a, 4b bis zur Rückwand des gegenüberliegenden Stegbleches 5 geführt sind. Mit dem Stegblechdeckel 14 wird der Bereich zwischen den abgekanteten Stegblechen 4a, 4b, welche in die Schottwände 8b, 8c übergehen, verschlossen, um die hohle Struktur 6 zu erhalten.

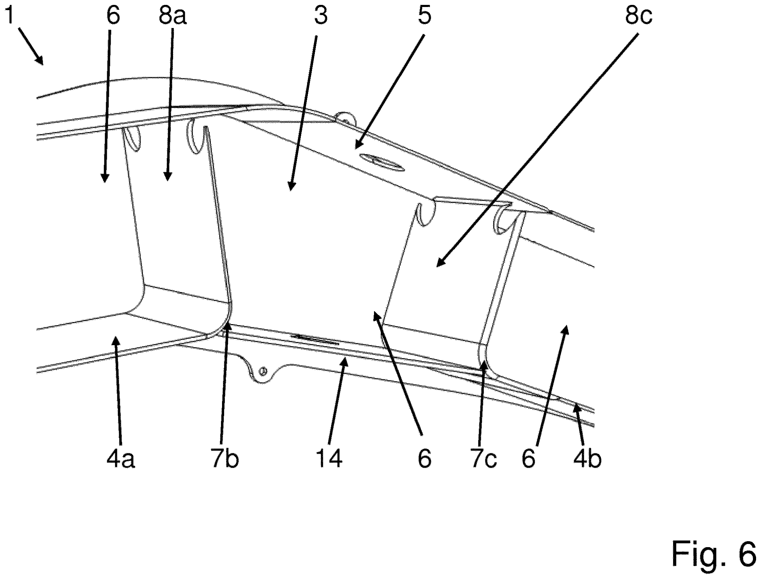

Der in Figur 5 gezeigte Bereich der Blechanordnung 1 ist in Figur 6 in einer perspektivischen Seitenansicht offen dargestellt. In der Darstellung fehlt der abschließende Obergurt 2 (Fig.7), sodass der Blick auf den Untergurt 3 und die abgekanteten Stegbleche 4a, 4b sowie den Stegblechdeckel 14 frei ist. Die abgekantet gebogenen Stegbleche 4a, 4b bilden mit der Abkantung 7b, 7c die zwei gut zu erkennenden Schottwände 8a, 8c aus. Diese Schottwände 8a, 8c reichen bis an das gegenüberliegende Stegblech 5, wo die abgekanteten Stegbleche 4a, 4b mit dem gegenüberliegenden Stegblech 5 verbunden sind. Mit dem Stegblechdeckel 14 wird die hohle Struktur 6 zwischen den Schottwänden 8a, 8c, dem hier nicht dargestellten Obergurt 2 (Fig. 7), dem Untergurt 3 und den Stegblechen 5, 4a, 4b verschlossen.

Die Figur 7 zeigt eine Explosionszeichnung zu der Blechanordnung 1, die eine Kröpfung 17 (Fig. 3) an dem Mastsegment 51b (Fig. 1) ausbildet. Neben dem passend zugeschnittenen Obergurt 2 und dem passend zugeschnittenen Untergurt 3 ist ein ebenfalls passend zugeschnittenes Stegblech 5 gezeigt. Wie in Verbindung mit Figur 3 bezüglich des Obergurtes 2 bereits erläutert, sind auch das Stegblech 5 und der Untergurt 3 aus miteinander verschweißten Blechen unterschiedlicher Blechdicken an Blechdickensprüngen 18 zusammengesetzt. Zudem sind drei abgekantete Stegbleche 4, 4a, 4b zu sehen, wobei das mittlere Stegblech 4a zwei Abkantungen 7a, 7b aufweist, während die äußeren, abgekanteten Stegbleche 4, 4b in dem dargestellten Ausschnitt des Mastsegmentes 51b (Fig. 3) um die Kröpfung 17 (Fig. 3) nur jeweils eine Abkantung 7, 7c aufweisen. Die Stegblechdeckel 14, 14a sind aus einfachen, nach Bedarf gebogenen, Blechzuschnitten gebildet.

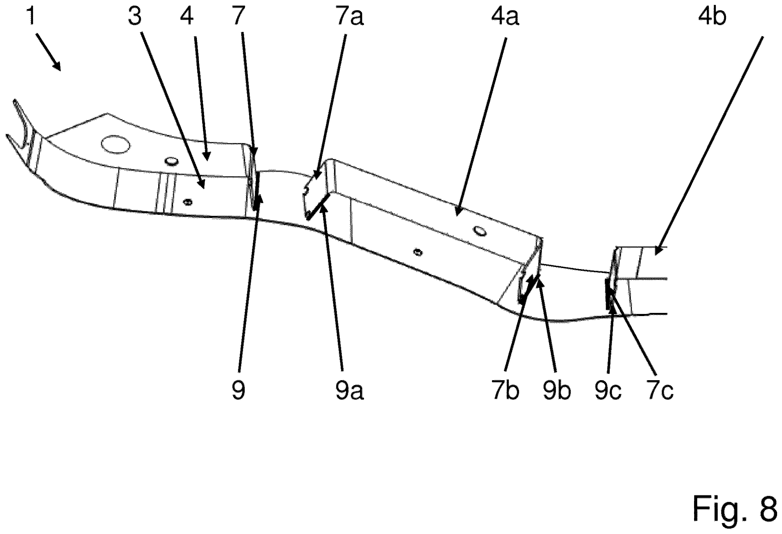

Die Figur 8 zeigt den Untergurt 3 mit abgekanteten Stegblechen 4, 4a, 4b gemäß Figur 7, wobei die abgekanteten Stegbleche 4, 4a, 4b auf dem Untergurt 3 angeordnet sind, sodass die Abkantungen 7, 7a, 7b, 7c auf dem Untergurt 3 aufliegen. Hierdurch kann der Untergurt 3 einfach mit den Abkantungen 7, 7a, 7b, 7c verschweißt werden.

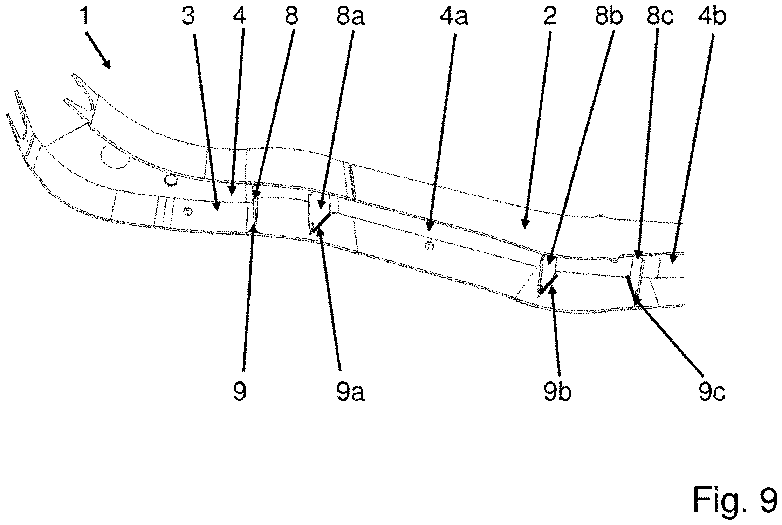

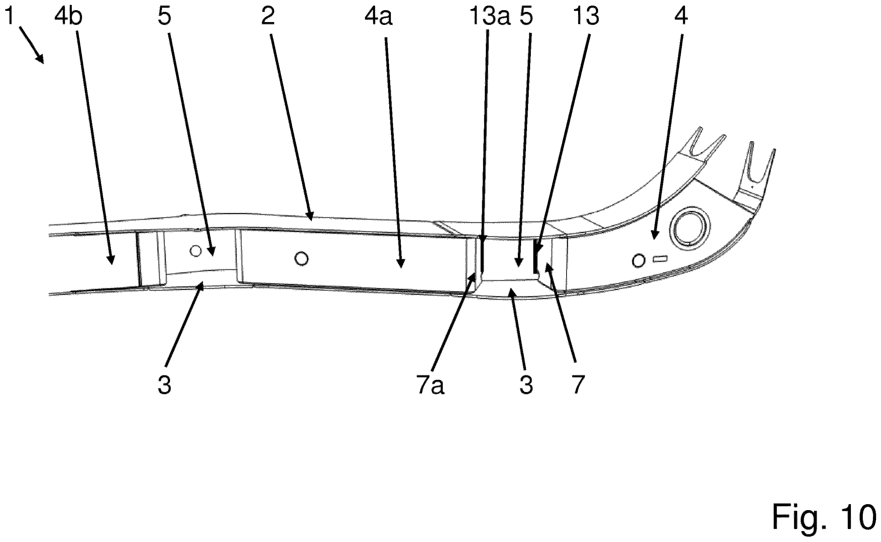

Auch nach Anordnung des Obergurtes 2 auf den abgekanteten Stegblechen 4, 4a, 4b ist die Anbringung von Schweißnähten 9, 9a, 9b, 9c zur Verbindung des Untergurtes 3 mit den Abkantungen 7, 7a, 7b, 7c der abgekanteten Stegbleche 4, 4a, 4b möglich, wie dies aus Figur 9 ersichtlich ist. Auf gleiche Weise zugänglich sind in dieser Darstellung nicht ersichtliche Schweißnähte, die die Abkantungen 7, 7a, 7b, 7c mit dem Obergurt 2 verbinden. Die Reihenfolge der Anordnung von Obergurt 2 und Untergurt 3 auf den abgekanteten Stegblechen 4, 4a, 4b und der Zeitpunkt der Verschweißung der Abkantungen 7, 7a, 7b, 7c mit dem angeordneten Obergurt 2 und dem angeordneten Untergurt 3 kann je nach Anwendungsfall variiert werden. Spätestens nach Anordnung des Obergurtes 2 und des Untergurtes 3 sollten jedoch sowohl Untergurt 3 als auch Obergurt 2 mit den abgekanteten Stegblechen 4, 4a, 4b verschweißt werden, sodass die Abkantungen 7, 7a, 7b, 7c Schottwände 8, 8a, 8b, 8c ausbilden. Nach dem Verschweißen der Abkantungen 7, 7a, 7b, 7c mit dem Obergurt 2 und dem Untergurt 3 können die in Figur 9 angedeuteten Schweißnähte 9, 9a, 9b, 9c sehr einfach nachbearbeitet, also beispielsweise abgeschliffen oder abgefräst werden, da diese, wie zu sehen, problemlos zugänglich sind. In Figur 10 ist der Ausschnitt gemäß Figur 9 gezeigt, wobei das Bauteil 1 um 180° gedreht ist. Zwischen Obergurt 2 und Untergurt 3 ist nun ein Stegblech 5 angeordnet, dessen Rückwand in Figur 10 zu sehen ist. Wie aus Figur 10 weiterhin ersichtlich ist, sind über die Hohlräume zwischen den Abkantungen 7, 7a der Stegbleche 4, 4a, 4b die an der Stegblechrückwand 5 anliegenden Enden der Schottwände 8, 8a, 8b, 8c zugänglich. Dies ermöglicht ein einfaches Verschweißen der Abkantungen 7, 7a mit der Stegblechrückwand 5. Hierzu sind die zwei die Stegblechrückwände 5 mit den Abkantungen 7, 7a verbindenden Schweißnähte 13, 13a angedeutet. Wie aus Figur 10 ersichtlich, können auch die die Stegblechrückwand 5 mit den Abkantungen 7, 7a verbindenden Schweißnähte 13, 13a in diesem Zustand problemlos nachbearbeitet werden.

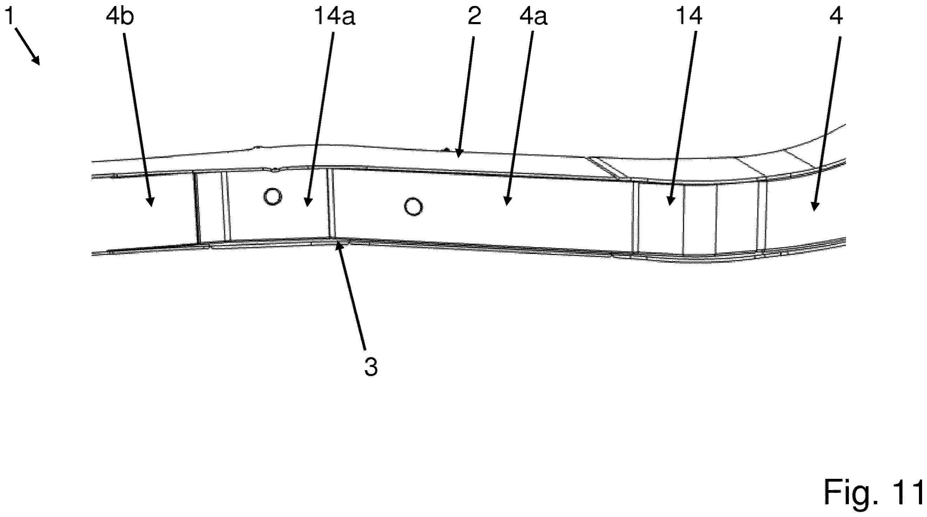

Erst im Anschluss daran werden die Stegblechdeckel 14, 14a zwischen Obergurt 2 und Untergurt 3 und den abgekanteten Stegblechen 4, 4a, 4b angeordnet und anschließend von außen verschweißt. Dies ist in Figur 11 ersichtlich, wo die Stegblechdeckel 14, 14a die hohle Struktur 6 (Fig. 5) abschließen. Durch diese letzten Schweißnähte entsteht eine sehr torsionssteife, allseitig durch Schweißnähte verschlossene Struktur.

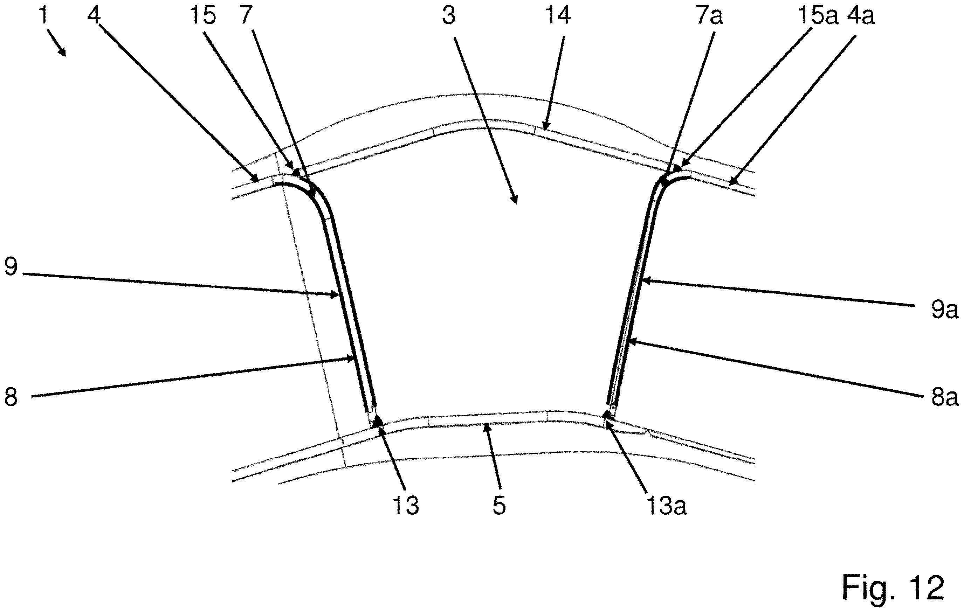

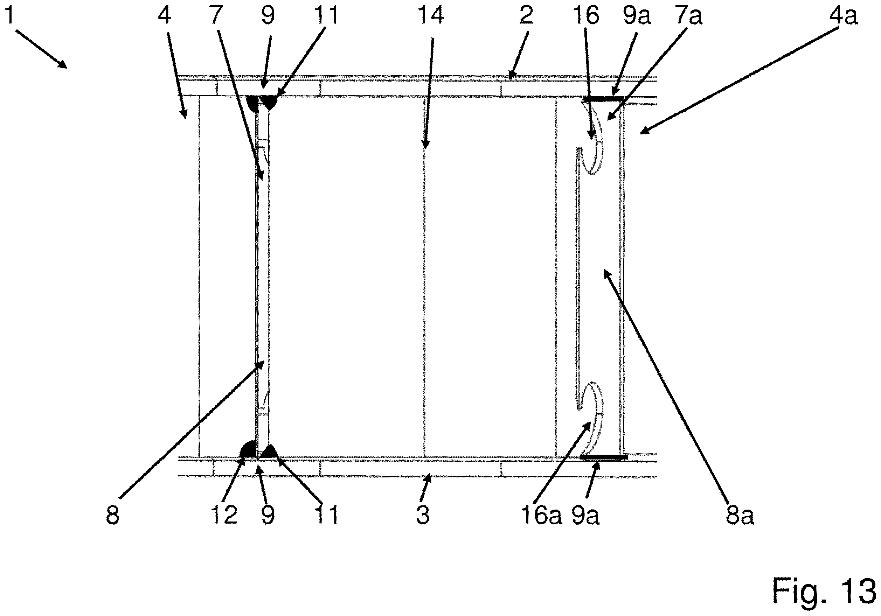

In Figur 12 soll der Bereich zwischen den Schottwänden 8, 8a genauer betrachtet werden, sodass eine Schnittansicht durch die Blechanordnung 1 gezeigt ist. Zu erkennen sind die abgekanteten Stegbleche 4, 4a, die über die Abkantungen 7, 7a in die Schottwände 8, 8a übergehen. Die Abkantungen 7, 7a bilden Verlängerungen der Stegbleche 4, 4a, die bis zur Rückwand des gegenüberliegenden Stegbleches 5 führen. Der Bereich zwischen den Schottwänden 8, 8a ist mit dem Stegblechdeckel 14 verschlossen. Zu erkennen ist, dass der Stegblechdeckel 14 mit den Abkantungen 7, 7a bzw. den abgekanteten Stegblechen 4, 4a über Schweißnähte 15, 15a verbunden ist. Diese Schweißnähte 15, 15a können im Nachgang einfach nachbearbeitet werden. Die Schottwände 8, 8a der abgekanteten Stegbleche 4, 4a sind mit dem gegenüberliegenden Stegblech 5 mittels je einer Schweißnaht 13, 13a verbunden. Diese Schweißnähte 13, 13a können vor Anordnung des Stegblechdeckels 14 nachbearbeitet werden, sodass die Kerbwirkung dieser Schweißnähte 13, 13a auf das Stegblech 5 gering ist. Mit den zwei Doppellinien sind die Doppelschweißnähte 9, 9a angedeutet, mit welchen der Untergurt 3 mit den Abkantungen 9, 9a verbunden ist. Beispielsweise ist auf einer Seite der Schottwand 8, 8a eine Schweißnaht 11 (Fig. 13) in Form einer HV-Naht 11 (Fig. 13) zur Verbindung der Abkantung 7, 7a mit dem Untergurt 3 vorgesehen, während auf der anderen Seite der Schottwand 8, 8a eine Schweißnaht 12 (Fig. 13) in Form einer Kehlnaht 12 (Fig. 13) den Untergurt 3 mit der Abkantung 7, 7a verbindet. Diese Doppelschweißnähte 9, 9a können sehr einfach nachbearbeitet werden, solange das Stegblech 5 nicht an den Schottwänden 8, 8a angeordnet ist. Hierdurch lässt sich die Kerbwirkung der Schweißnähte 9, 9a bzw. 11, 12 auf den Untergurt 3 weiter reduzieren. Andere Schweißnahtformen sind auch möglich und, soweit die Steifigkeit der Blechanordnung ausreichend ist, kann auch eine einseitige Schweißnaht unter Umständen ausreichend sein.

Mit Figur 13 ist der Bereich aus Figur 12 in einer Seitenansicht gezeigt. Zur Erläuterung ist das Stegblech 5 (Fig. 12) nicht dargestellt, sodass ein Blick zwischen die Schottwände 8, 8a ermöglicht wird. Zu erkennen ist, dass die Abkantungen 7, 7a der Stegbleche 4, 4a zur Bildung der Schottwände 8, 8a jeweils mit dem Obergurt 2 und dem Untergurt 3 verschweißt sind. Hierzu sind jeweils Doppelschweißnähte 9, 9a beispielsweise in Form einer HV-Naht 11 auf der einen Seite der Schottwand 8, 8a und in Form einer Kehlnaht 12 auf der anderen Seite der Schottwand 8, 8a vorgesehen. Diese Doppelschweißnähte 9, 9a dienen zur Verbindung der Abkantungen 7, 7a mit dem Obergurt 2 und dem Untergurt 3 und sind in dieser Figur vor der Nachbearbeitung gezeigt. Bevor das nicht dargestellte Stegblech 5 angeordnet wird, sind die hier gezeigten Schweißnähte 9, 9a, bzw. 11, 12 zugänglich und können von der hier gezeigten Seite aus nachbearbeitet werden, um die Kerbwirkung der Schweißnähte 9, 9a, bzw. 11, 12 an dem Obergurt 2 und dem Untergurt 3 zu reduzieren.

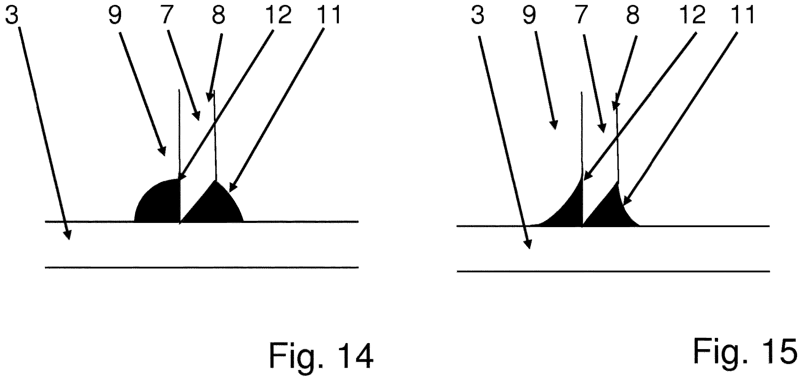

Die Figur 14 zeigt beispielhaft eine Schnittdarstellung durch eine der oben bereits beschriebenen Doppelschweißnähte 9, 9a, 9b, 9c. Wie zu erkennen ist, verbindet die Doppelschweißnaht 9 die Schottwand 8 bildende Abkantung 7 mit dem Untergurt 3. Hierzu weist die Doppelschweißnaht 9 auf einer Seite der Schottwand 8 eine HV-Naht 11 und auf der anderen Seite eine Schweißnaht 12 in Form einer Kehlnaht 12 auf. Die in Figur 14 gezeigte Doppelschweißnaht 9 ist unbearbeitet.

In Figur 15 ist eine Schnittdarstellung gemäß Figur 14 gezeigt, wobei die Doppelschweißnaht 9 hier nachbearbeitet ist. Die Nachbearbeitung der Schweißnaht 9 erfolgte mittels Ausschleifen oder Abfräsen, um vorzugsweise eine abgerundete Kontur zu erhalten. Die hier angedeutete abgerundete Kontur der Doppelschweißnaht 9 reduziert die Kerbwirkung der Doppelschweißnaht 9 bildenden Nähte 11, 12 am Untergurt 3.

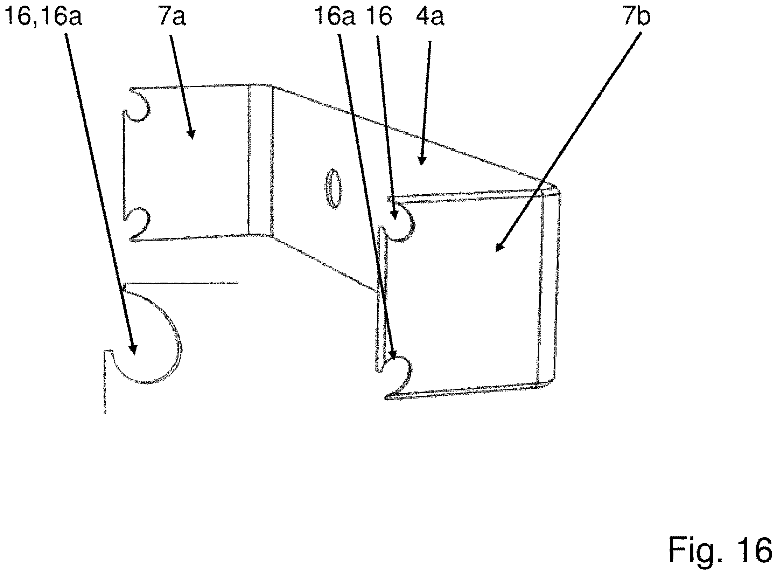

Die Figur 16 zeigt eine Seitenansicht des doppelt abgekanteten Stegblechs 4a. In dieser Darstellung sind Aussparungen 16, 16a zu erkennen, die an den Ecken der Schottwand 8a, 8b bildenden Abkantungen 7a, 7b des Stegbleches 4a vorgesehen sind. Mit den bogenförmigen Aussparungen 16, 16a können die Schweißnähte 9, 9a, 9b, 9c, 13, 13a an den Abkantungen 7, 7a, 7b, 7c möglichst weit in die Ecke zwischen Stegblechrückwand 5 und Obergurt 2 bzw. Untergurt 3 fortgeführt werden, dennoch sorgen die Aussparungen 16, 16a in den Ecken der Schottwände 8, 8a, 8b, 8c für eine Unterbrechung der Schweißnähte 9, 9a, 9b, 9c, 13, 13a, wobei insbesondere durch die Form der Aussparungen 16, 16a die Kerbwirkung der Schweißnähte 9, 9a, 9b, 9c, 13, 13a auf den Untergurt 3 bzw. den Obergurt 2 sowie das gegenüberliegende Stegblech 5 reduziert wird.

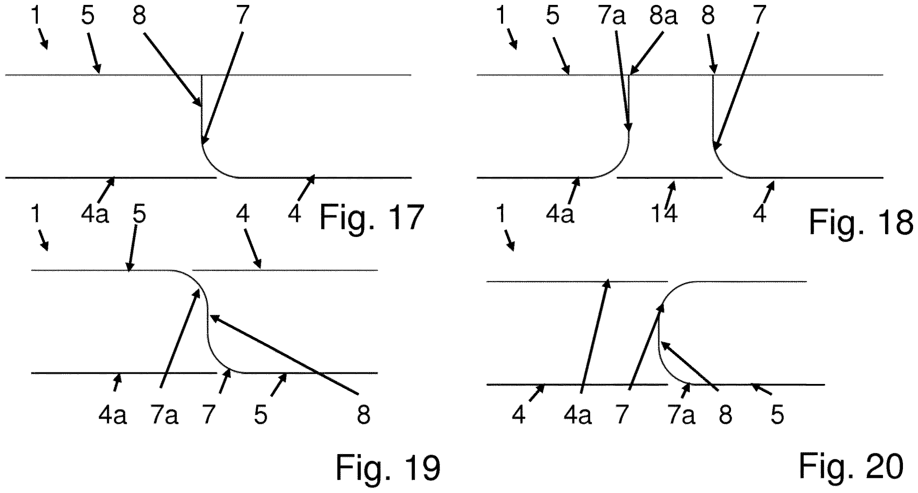

Abgesehen von dem in Figur 17 schematisch dargestellten 2. nicht erfindungsgemäßen Ausführungsbeispiel einer Blechanordnung 1 mit einfacher Schottwand 8, sind auch noch weitere Ausgestaltungen möglich. Bei dem in Figur 17 dargestellten Beispiel ist ein Schnitt durch die seitlichen Stegbleche 4, 4a, 5 vorgenommen, um die Abkantung 7 des abgekanteten Stegbleches 4 zu zeigen, die eine Schottwand 8 in der hohlen Struktur der Blechanordnung 1 ausbildet. An die Abkantung 7 des einen Stegbleches 4 schließt hier einfach ein weiteres Stegblech 4a an.

Die Figur 18 zeigt eine Blechanordnung 1 mit doppelter Schottwand 8, 8a in erster Ausführung. Im hier gezeigten Beispiel sind zwei abgekantete Stegbleche 4, 4a so gebogen, dass sie jeweils eine Schottwand 8, 8a in der hohlen Struktur bilden. Die Schottwände 8, 8a reichen bis zu dem den gekanteten Stegblechen 4, 4a gegenüberliegenden Stegblech 5. Der Bereich zwischen diesen beiden Schottwänden 8, 8a ist mit einem Stegblechdeckel 14 verschlossen.

Mit Figur 19 ist eine nicht erfindungsgemäße Blechanordnung 1 mit einfacher Schottwand 8 in zweiter Ausführung offenbart. Bei dieser Ausführung ist ein Stegblech 5 doppelt entgegengesetzt gekantet, um eine Schottwand 8 in der hohlen Struktur auszubilden. An die Abkantungen 7, 7a schließen sich jeweils Stegbleche 4, 4a an, die die hohle Struktur weiterbilden.

Die Figur 20 zeigt eine nicht erfindungsgemäße Blechanordnung 1 mit einfacher Schottwand 8 in dritter Ausführung. Bei dieser Ausgestaltung ist ein Stegblech 5 doppelt in gleicher Richtung gekantet, sodass eine Schottwand 8 durch die Abkantungen 7, 7a ausgebildet wird. An die Abkantungen 7, 7a schließen sich weitere Stegbleche 4, 4a an, um die hohle Struktur fortzubilden.

Die Figuren 17 bis 20 zeigen zur Vereinfachung verschiedene gerade Blechanordnungen 1. Es ist aber darauf hinzuweisen, dass Blechanordnungen 1 insbesondere bei gebogenen Bauteilen, die hohen Torsionsbelastungen ausgesetzt ist, wie bei der dargestellten Kröpfung 17, besonders vorteilhaft sind. Insbesondere besteht die Kröpfung 17 nach dem Verschweißen aller Bauteile aus drei von allen Seiten durch Schweißnähte 9, 10, 11, 12, 13, 15 geschlossenen hohlen Strukturen 6 (Kästen) von denen jede für sich sehr verwindungssteif ist, so dass insgesamt eine Struktur gebildet wurde, die sich auch bei hohen Torsionsbelastungen nur minimal verformt. Bei gebogenen Bauteilen wie der in Figur 1 gezeigten Trägern 41 der Rahmenabstützung 40 ist diese Blechanordnung sehr vorteilhaft einsetzbar, aber auch bei geraden Trägern 44 einer Rahmenabstützung 40, die sehr lang sind, ist die Verwendung der Schottwände 8 vorteilhaft

Wesentlich ist, dass die Stegbleche 4, 4a, 4b abgekantet sind, wobei die hierdurch gebildete Abkantung 7, 7a, 7b, 7c des Stegbleches 4, 4a, 4b, 5 in der hohlen Struktur 6 eine Schottwand 8, 8a, 8b, 8c ausbildet.

Der Radius der Abkantungen 7 spielt bei der Blechanordnung eine wichtige Rolle.

Weil der Radius einen Einfluss auf die lokale Steifigkeit der Blechanordnung 1 hat, kann er so gewählt werden, dass das Verhältnis zwischen der Torsionssteifigkeit und der lokalen Spannung optimiert wird. Hintergrund ist, dass bei einer zu hohen lokalen Steifigkeit der Blechanordnung unerwünschte Kerbwirkungen an dem Bauteil auftreten können, die durch eine Veränderung der Radien wieder reduziert werden können, wobei der Radius der Abkantung 7 bestimmt, wie die Spannung in dem Bauteil lokal verteilt wird.

### Bezuaszeichenliste

- 1: Blechanordnung
- 2: Obergurt
- 3: Untergurt
- 4 4a 4b 4c: Stegbleche A
- 5: Stegblech B
- 6: hohle Struktur
- 7 7a 7b 7c: Abkantung
- 8 8a 8b 8c: Schottwand
- 9 9a 9b 9c: Schweißnaht A
- 10: Seite A (Schottwand)
- 11: HV-Naht
- 12: Kehlnaht
- 13 13a: Schweißnaht B
- 14: Stegblechdeckel
- 15 15a: Schweißnaht C
- 16 16a: Aussparung
- 17: Kröpfung
- 18: Blechdickensprung

- 40: Rahmenabstützung
- 41: Träger ausschiebbar
- 42: Ausschubabschnitt
- 43: Teleskop
- 44: Träger klappbar

- 50: Knickmast
- 51 51a 51b: Mastsegmente
- 52 52a 52b: Knickgelenke

- 100: Großmanipulator
- 101: Hochachse
- 102: Drehschemel

## Patentansprüche

1. Großmanipulator (100), insbesondere Autobetonpumpe, mit einer Blechanordnung (1) mit einem Obergurt (2), einem Untergurt (3) und mindestens zwei seitlichen Stegblechen (4, 4a, 4b, 5), wobei der Obergurt (2) und der Untergurt (3) zusammen mit den Stegblechen (4, 4a, 4b, 5) eine hohle Struktur (6) ausbilden, **dadurch gekennzeichnet,**
**dass** zwei der Stegbleche (4 4b) einfach abgekantet sind, wobei die hierdurch gebildeten Abkantungen (7, 7c) der Stegbleche (4, 4b) in der hohlen Struktur (6) jeweils eine Schottwand (8, 8c) ausbilden und ein weiteres Stegblech (4a) doppelt abgekantet ist, wobei die hierdurch gebildeten Abkantungen (7a, 7b) des weiteren Stegbleches (4a) in der hohlen Struktur (6) jeweils eine Schottwand (8a, 8b) ausbilden, wobei die hohle Struktur (6) durch ein gegenüberliegendes Stegblech (5) gebildet ist, dessen Stegblechrückwand mit den Abkantungen (7, 7a, 7b, 7c) der abgekanteten Stegbleche (4, 4a, 4b) verbunden ist, wobei mit Stegblechdeckeln (14, 14a) die Bereiche zwischen den abgekanteten Stegblechen (4, 4a, 4b), welche in die Schottwände (8, 8a, 8b, 8c) übergehen, verschlossen sind, um die hohle Struktur (6) zu erhalten, wobei die Stegblechdeckel (14) auf den abgekanteten Stegblechen (4, 4a, 4b) angeordnet und mit diesen und/oder dem Obergurt (2) und dem Untergurt (3) verschweißt sind, um die hohle Struktur (6) abzuschließen.

2. Großmanipulator (100), insbesondere Autobetonpumpe, mit einer Blechanordnung (1) nach Anspruch 1, **dadurch gekennzeichnet, dass** mindestens eine Abkantung (7, 7a, 7b, 7c) mittels Schweißnähten (9, 9a, 9b, 9c, 11, 12) mit dem Obergurt (2) und dem Untergurt (3) verbunden ist.

3. Großmanipulator (100), insbesondere Autobetonpumpe, mit einer Blechanordnung (1) nach Anspruch 2, **dadurch gekennzeichnet, dass** die Schweißnähte (9, 9a, 9b, 9c, 11, 12) nachbearbeitet sind.

4. Großmanipulator (100), insbesondere Autobetonpumpe, mit einer Blechanordnung (1) nach einem der Ansprüche 1 bis 3, **dadurch gekennzeichnet, dass** die mindestens eine Abkantung (7, 7a, 7b, 7c) des einen Stegbleches (4, 4a, 4b) mittels mindestens einer Schweißnaht (13, 13a) mit dem gegenüberliegenden Stegblech (5) verbunden ist.

5. Großmanipulator (100), insbesondere Autobetonpumpe, mit einer Blechanordnung (1) nach Anspruch 4, **dadurch gekennzeichnet, dass** die mindestens eine Schweißnaht (13, 13a) nachbearbeitet ist.

6. Großmanipulator (100), insbesondere Autobetonpumpe, mit einer Blechanordnung (1) nach einem der Ansprüche 1 bis 5, **dadurch gekennzeichnet, dass** der Obergurt (2), der Untergurt (3) und die seitlichen Stegbleche (4, 4a, 4b, 5) eine Kröpfung (17) ausbilden.

7. Rahmenabstützung (40) für einen Großmanipulator (100), die in das Fahrzeugprofil ein- ausziehbare, vorzugsweise bogenförmige Träger (41) und oder klappbare Träger aufweist, wobei die Träger (41) eine Blechanordnung (1) mit einem Obergurt (2), einem Untergurt (3) und mindestens zwei seitlichen Stegblechen (4, 4a, 4b, 5) aufweisen, wobei der Obergurt (2) und der Untergurt (3) zusammen mit den Stegblechen (4, 4a, 4b, 5) eine hohle Struktur (6) ausbilden, wobei zwei der Stegbleche (4, 4b) einfach abgekantet sind, wobei die hierdurch gebildeten Abkantungen (7, 7c) der Stegbleche (4, 4b) in der hohlen Struktur (6) jeweils eine Schottwand (8, 8c) ausbilden und ein weiteres Stegblech (4a) doppelt abgekantet ist, wobei die hierdurch gebildeten Abkantungen (7a, 7b) des weiteren Stegbleches (4a) in der hohlen Struktur (6) jeweils eine Schottwand (8a, 8b) ausbilden und wobei die hohle Struktur (6) durch ein gegenüberliegendes Stegblech (5) gebildet ist, dessen Stegblechrückwand mit den Abkantungen (7, 7a, 7b, 7c) der abgekanteten Stegbleche (4, 4a, 4b) verbunden ist, wobei mit Stegblechdeckeln (14, 14a) die Bereiche zwischen den abgekanteten Stegblechen (4, 4a, 4b), welche in die Schottwände (8, 8a, 8b, 8c) übergehen, verschlossen sind, um die hohle Struktur (6) zu erhalten, wobei die Stegblechdeckel (14) auf den abgekanteten Stegblechen (4, 4a, 4b) angeordnet und mit diesen und/oder dem Obergurt (2) und dem Untergurt (3) verschweißt sind, um die hohle Struktur (6) abzuschließen.

8. Knickmast (50) für einen Großmanipulator (100) mit einer Mehrzahl von Mastsegmenten (51, 51a, 51b), wobei die Mastsegmente (51, 51a, 51b) an Knickgelenken (52, 52a, 52b) jeweils um Knickachsen gegenüber einem benachbarten Mastsegment (51, 51a, 51b) oder einem Drehschemel (102) verschwenkbar sind, mit mindestens einem Mastsegment (1) mit einer Blechanordnung (1) mit einem Obergurt (2), einem Untergurt (3) und mindestens zwei seitlichen Stegblechen (4, 4a, 4b, 5), wobei der Obergurt (2) und der Untergurt (3) zusammen mit den Stegblechen (4, 4a, 4b, 5) eine hohle Struktur (6) ausbilden, wobei zwei der Stegbleche (4, 4b) einfach abgekantet sind wobei die hierdurch gebildeten Abkantungen (7, 7c) der Stegbleche (4, 4b) in der hohlen Struktur (6) jeweils eine Schottwand (8, 8c) ausbilden und ein weiteres Stegblech (4a) doppelt abgekantet ist, wobei die hierdurch gebildeten Abkantungen (7a, 7b) des weiteren Stegbleches (4a) in der hohlen Struktur (6) jeweils eine Schottwand (8a, 8b) ausbilden, wobei die hohle Struktur (6) durch ein gegenüberliegendes Stegblech (5) gebildet ist, dessen Stegblechrückwand mit den Abkantungen (7, 7a, 7b, 7c) der abgekanteten Stegbleche (4, 4a, 4b) verbunden ist, wobei mit Stegblechdeckeln (14, 14a) die Bereiche zwischen den abgekanteten Stegblechen (4, 4a, 4b), welche in die Schottwände (8, 8a, 8b, 8c) übergehen, verschlossen sind, um die hohle Struktur (6) zu erhalten, wobei die Stegblechdeckel (14) auf den abgekanteten Stegblechen (4, 4a, 4b) angeordnet und mit diesen und/oder dem Obergurt (2) und dem Untergurt (3) verschweißt sind, um die hohle Struktur (6) abzuschließen.

9. Verfahren zur Herstellung einer Blechanordnung (1) für einen Großmanipulator (100), insbesondere Autobetonpumpe, gemäß einem der Ansprüche 1 bis 6, umfassend folgende Schritte:
- Anordnung von einem Obergurt (2) und einem Untergurt (3) auf zwei einfach abgekanteten Stegblechen (44b) und einem weiteren doppelt abgekanteten Stegblech (4), sodass die gebildeten Abkantungen (7, 7a, 7b, 7c) der Stegbleche (4, 4a, 4b) jeweils eine Schottwand (8, 8a, 8b, 8c) ausbilden,
- Verschweißen der Abkantungen (7, 7a, 7b, 7c) mit dem Obergurt (2) und dem Untergurt (3),
- Anordnung mindestens einer Stegblechrückwand (5),
- Verschweißen der Abkantungen (7, 7a, 7b, 7c) mit der Stegblechrückwand (5),
- Anordnung von Stegblechdeckeln (14, 14a), und
- Verschweißen der Stegblechdeckel (14, 14a) mit den abgekanteten Stegblechen (4, 4a, 4b) und / oder mit dem Obergurt (2) und dem Untergurt (3).

10. Verfahren nach Anspruch 9, **dadurch gekennzeichnet, dass** nach dem Verschweißen der Abkantung (7, 7a, 7b, 7c) mit dem Obergurt (2) und dem Untergurt (3) und vor dem Anordnen der Stegblechrückwand (5) und/oder dem Anordnen des Stegblechdeckels (14, 14a) eine Nachbearbeitung der Obergurt (2) und Untergurt (3) mit der Abkantung (7, 7a, 7b, 7c) verbindenden Schweißnähte (9, 9a, 9b, 9c, 11, 12) erfolgt.

11. Verfahren nach Anspruch 9 oder 10, **dadurch gekennzeichnet, dass** nach dem Verschweißen der Abkantung (7, 7a, 7b, 7c) mit der Stegblechrückwand (5) und vor dem Anordnen des Stegblechdeckels (14, 14a) eine Nachbearbeitung der die Stegblechrückwand (5) mit der Abkantung (7, 7a, 7b, 7c) verbindenden Schweißnaht (13, 13a) erfolgt.

## Claims

1. Large manipulator (100), in particular a truck-mounted concrete pump, with a sheet metal arrangement (1) with an upper flange (2), a lower flange (3) and at least two lateral web plates (4, 4a, 4b, 5), wherein the upper flange (2) and the lower flange (3) together with the web plates (4, 4a, 4b, 5) form a hollow structure (6), **characterised in that** two of the web plates (4, 4b) are singly bent, wherein the bent portions (7, 7c) formed hereby of the web plates (4, 4b) respectively form a bulkhead (8, 8c) in the hollow structure (6) and a further web plate (4a) is doubly bent, wherein the bent portions (7a, 7b) formed hereby of the further web plate (4a) each form a bulkhead (8a, 8b) in the hollow structure (6), wherein the hollow structure (6) is formed by an opposing web plate (5), the web plate rear wall of which is connected to the bent portions (7, 7a, 7b, 7c) of the bent web plates (4, 4a, 4b), wherein the areas between the bent web plates (4, 4a, 4b), which transition into the bulkheads (8, 8a, 8b, 8c), are closed by web plate covers (14, 14a) in order to maintain the hollow structure (6), wherein the web plate covers (14) are arranged on the bent web plates (4, 4a, 4b) and are welded to these and/or to the upper flange (2) and the lower flange (3) in order to complete the hollow structure (6).

2. Large manipulator (100), in particular a truck-mounted concrete pump, with a sheet metal arrangement (1) according to claim 1, **characterised in that** at least one bent portion (7, 7a, 7b, 7c) is connected by means of weld seams (9, 9a, 9b, 9c, 11, 12) to the upper flange (2) and the lower flange (3).

3. Large manipulator (100), in particular a truck-mounted concrete pump, with a sheet metal arrangement (1) according to claim 2, **characterised in that** the weld seams (9, 9a, 9b, 9c, 11, 12) are finished.

4. Large manipulator (100), in particular a truck-mounted concrete pump, with a sheet metal arrangement (1) according to any one of claims 1 to 3, **characterised in that** the at least one bent portion (7, 7a, 7b, 7c) of the one web plate (4, 4a, 4b) is connected by means of at least one weld seam (13, 13a) to the opposing web plate (5).

5. Large manipulator (100), in particular a truck-mounted concrete pump, with a sheet metal arrangement (1) according to claim 4, **characterised in that** the at least one weld seam (13, 13a) is finished.

6. Large manipulator (100), in particular a truck-mounted concrete pump, with a sheet metal arrangement (1) according to any one of claims 1 to 5, **characterised in that** the upper flange (2), the lower flange (3) and the lateral web plates (4, 4a, 4b, 5) form a crank (17).

7. Frame outrigger (40) for a large manipulator (100), which outrigger has preferably curved supports (41), which are retractable into the vehicle profile and extendable, and/or folding supports, wherein the supports (41) have a sheet metal arrangement (1) with an upper flange (2), a lower flange (3) and at least two lateral web plates (4, 4a, 4b, 5), wherein the upper flange (2) and the lower flange (3) together with the web plates (4, 4a, 4b, 5) form a hollow structure (6), wherein two of the web plates (4, 4b) are singly bent, wherein the bent portions (7, 7c) formed hereby of the web plates (4, 4b) respectively form a bulkhead (8, 8c) in the hollow structure (6) and a further web plate (4a) is doubly bent, wherein the bent portions (7a, 7b) formed hereby of the further web plate (4a) each form a bulkhead (8a, 8b) in the hollow structure (6) and wherein the hollow structure (6) is formed by an opposing web plate (5), the web plate rear wall of which is connected to the bent portions (7, 7a, 7b, 7c) of the bent web plates (4, 4a, 4b), wherein the areas between the bent web plates (4, 4a, 4b), which transition into the bulkheads (8, 8a, 8b, 8c), are closed by web plate covers (14, 14a) in order to maintain the hollow structure (6), wherein the web plate covers (14) are arranged on the bent web plates (4, 4a, 4b) and are welded to these and/or to the upper flange (2) and the lower flange (3) in order to complete the hollow structure (6).

8. Articulated boom (50) for a large manipulator (100) with a plurality of boom segments (51, 51a, 51b), wherein the boom segments (51, 51a, 51b) are pivotable at articulated joints (52, 52a, 52b) respectively about axes of rotation with respect to an adjacent boom segment (51, 51a, 51b) or a turntable (102), with at least one boom segment (1) with a sheet metal arrangement (1) with an upper flange (2), a lower flange (3) and at least two lateral web plates (4, 4a, 4b, 5), wherein the upper flange (2) and the lower flange (3) together with the web plates (4, 4a, 4b, 5) form a hollow structure (6), wherein two of the web plates (4, 4b) are singly bent, wherein the bent portions (7, 7c) formed hereby of the web plates (4, 4b) respectively form a bulkhead (8, 8c) in the hollow structure (6) and a further web plate (4a) is doubly bent, wherein the bent portions (7a, 7b) formed hereby of the further web plate (4a) each form a bulkhead (8a, 8b) in the hollow structure (6), wherein the hollow structure (6) is formed by an opposing web plate (5), the web plate rear wall of which is connected to the bent portions (7, 7a, 7b, 7c) of the bent web plates (4, 4a, 4b), wherein the areas between the bent web plates (4, 4a, 4b), which transition into the bulkheads (8, 8a, 8b, 8c), are closed by web plate covers (14, 14a) in order to maintain the hollow structure (6), wherein the web plate covers (14) are arranged on the bent web plates (4, 4a, 4b) and are welded to these and/or to the upper flange (2) and the lower flange (3) in order to complete the hollow structure (6).

9. Method for producing a sheet metal arrangement (1) for a large manipulator (100), in particular a truck-mounted concrete pump, according to any one of claims 1 to 6, comprising the following steps:
- arrangement of an upper flange (2) and a lower flange (3) on two singly bent web plates (44b) and a further doubly bent web plate (4), so that the bent portions (7, 7a, 7b, 7c) of the web plates (4, 4a, 4b) that are formed each form a bulkhead (8, 8a, 8b, 8c),
- welding of the bent portions (7, 7a, 7b, 7c) to the upper flange (2) and the lower flange (3),
- arrangement of at least one web plate rear wall (5),
- welding of the bent portions (7, 7a, 7b, 7c) to the web plate rear wall (5),
- arrangement of web plate covers (14, 14a), and
- welding of the web plate covers (14, 14a) to the bent web plates (4, 4a, 4b) and/or to the upper flange (2) and the lower flange (3).

10. Method according to claim 9, **characterised in that** following welding of the bent portion (7, 7a, 7b, 7c) to the upper flange (2) and the lower flange (3) and before arranging the web plate rear wall (5) and/or arranging the web plate cover (14, 14a), finishing of the weld seams (9, 9a, 9b, 9c, 11, 12) connecting upper flange (2) and lower flange (3) to the bent portion (7, 7a, 7b, 7c) takes place.

11. Method according to claim 9 or 10, **characterised in that** following welding of the bent portion (7, 7a, 7b, 7c) to the web plate rear wall (5) and before arranging the web plate cover (14, 14a), finishing of the weld seam (13, 13a) connecting the web plate rear wall (5) to the bent portion (7, 7a, 7b, 7c) takes place.

## Revendications

1. Manipulateur de grande taille (100), notamment pompe à béton automotrice, avec un agencement de tôles (1) avec une membrure supérieure (2), une membrure inférieure (3) et au moins deux tôles d'âme latérales (4, 4a, 4b, 5), la membrure supérieure (2) et la membrure inférieure (3) réalisant conjointement avec les tôles d'âme (4, 4a, 4b, 5) une structure creuse (6), **caractérisé en ce que**
deux des tôles d'âme (4, 4b) sont simplement pliées, les pliages (7, 7c) ainsi formés des tôles d'âme (4, 4b) réalisant chacun une paroi de cloison (8, 8c) dans la structure creuse (6) et une autre tôle d'âme (4a) étant doublement pliée, les pliages (7a, 7b) ainsi formés de l'autre tôle d'âme (4a) réalisant chacun une paroi de cloison (8a, 8b) dans la structure creuse (6), la structure creuse (6) étant fermée par une tôle d'âme (5) opposée, dont la paroi arrière de tôle d'âme est reliée aux pliages (7, 7a, 7b, 7c) des tôles d'âme pliées (4, 4a, 4b), les zones entre les tôles d'âme pliées (4, 4a, 4b), qui se raccordent aux parois de cloison (8, 8a, 8b, 8c), étant fermées par des couvercles de tôle d'âme (14, 14a) pour obtenir la structure creuse (6), les couvercles de tôle d'âme (14) étant agencés sur les tôles d'âme pliées (4, 4a, 4b) et soudés à celles-ci et/ou à la membrure supérieure (2) et à la membrure inférieure (3) pour fermer la structure creuse (6).

2. Manipulateur de grande taille (100), notamment pompe à béton automotrice, avec un agencement de tôles (1) selon la revendication 1, **caractérisé en ce qu'**au moins un pliage (7, 7a, 7b, 7c) est relié à la membrure supérieure (2) et à la membrure inférieure (3) au moyen de cordons de soudure (9, 9a, 9b, 9c, 11, 12).

3. Manipulateur de grande taille (100), notamment pompe à béton automotrice, avec un agencement de tôles (1) selon la revendication 2, **caractérisé en ce que** les cordons de soudure (9, 9a, 9b, 9c, 11, 12) sont rectifiés.

4. Manipulateur de grande taille (100), notamment pompe à béton automotrice, avec un agencement de tôles (1) selon l'une quelconque des revendications 1 à 3, **caractérisé en ce que** l'au moins un pliage (7, 7a, 7b, 7c) de l'une des tôles d'âme (4, 4a, 4b) est relié à la tôle d'âme (5) opposée au moyen d'au moins un cordon de soudure (13, 13a).

5. Manipulateur de grande taille (100), notamment pompe à béton automotrice, avec un agencement de tôles (1) selon la revendication 4, **caractérisé en ce que** l'au moins un cordon de soudure (13, 13a) est rectifié.

6. Manipulateur de grande taille (100), notamment pompe à béton automotrice, avec un agencement de tôles (1) selon l'une quelconque des revendications 1 à 5, **caractérisé en ce que** la membrure supérieure (2), la membrure inférieure (3) et les tôles d'âme latérales (4, 4a, 4b, 5) réalisent un coude (17).

7. Soutien de châssis (40) pour un manipulateur de grande taille (100), qui présente des supports (41), de préférence en forme d'arc, pouvant être rentrés dans le profilé de véhicule, et ou des supports rabattables, les supports (41) présentant un agencement de tôles (1) avec une membrure supérieure (2), une membrure inférieure (3) et au moins deux tôles d'âme latérales (4, 4a, 4b, 5), la membrure supérieure (2) et la membrure inférieure (3) réalisant, conjointement avec les tôles d'âme (4, 4a, 4b, 5), une structure creuse (6), deux des tôles d'âme (4, 4b) étant simplement pliées, les pliages (7, 7c) ainsi formés des tôles d'âme (4, 4b) réalisant chacun une paroi de cloison (8, 8c) dans la structure creuse (6) et une autre tôle d'âme (4a) étant doublement pliée, les pliages (7a, 7b) ainsi formés de l'autre tôle d'âme (4a) réalisant chacun une paroi de cloison (8a, 8b) dans la structure creuse (6), et la structure creuse (6) étant formée par une tôle d'âme (5) opposée, dont la paroi arrière de tôle d'âme est reliée aux pliages (7, 7a, 7b, 7c) des tôles d'âme pliées (4, 4a, 4b), les zones entre les tôles d'âme pliées (4, 4a, 4b) qui se raccordent aux parois de cloison (8, 8a, 8b, 8c) étant fermées par des couvercles de tôle d'âme (14, 14a) pour obtenir la structure creuse (6), les couvercles de tôles d'âme (14) étant agencés sur les tôles d'âme pliées (4, 4a, 4b) et soudés à celles-ci et/ou à la membrure supérieure (2) et à la membrure inférieure (3) pour fermer la structure creuse (6).

8. Mât articulé (50) pour un manipulateur de grande taille (100) avec une pluralité de segments de mât (51, 51a, 51b), les segments de mât (51, 51a, 51b) pouvant pivoter sur des articulations de flexion (52, 52a, 52b) respectivement autour d'axes d'articulation par rapport à un segment de mât voisin (51, 51a, 51b) ou à une traverse tournante (102), avec au moins un segment de mât (1) avec un agencement de tôles (1) avec une membrure supérieure (2), une membrure inférieure (3) et au moins deux tôles d'âme latérales (4, 4a, 4b, 5), la membrure supérieure (2) et la membrure inférieure (3) réalisant conjointement avec les tôles d'âme (4, 4a, 4b, 5) une structure creuse (6), deux des tôles d'âme (4, 4b) étant simplement pliées, les pliages (7, 7c) ainsi formés des tôles d'âme (4, 4b) réalisant chacun une paroi de cloison (8, 8c) dans la structure creuse (6) et une autre tôle d'âme (4a) étant doublement pliée, les pliages (7a, 7b) ainsi formés de l'autre tôle d'âme (4a) réalisant chacun une paroi de cloison (8a, 8b) dans la structure creuse (6), la structure creuse (6) étant formée par une tôle d'âme (5) opposée, dont la paroi arrière de tôle d'âme est reliée aux pliages (7, 7a, 7b, 7c) des tôles d'âme pliées (4, 4a, 4b), les zones entre les tôles d'âme pliées (4, 4a, 4b) qui se raccordent aux parois de cloison (8, 8a, 8b, 8c) étant fermées par des couvercles de tôle d'âme (14, 14a) pour obtenir la structure creuse (6), les couvercles de tôle d'âme (14) étant agencés sur les tôles d'âme pliées (4, 4a, 4b) et soudées à celles-ci et/ou à la membrure supérieure (2) et à la membrure inférieure (3) pour fermer la structure creuse (6).

9. Procédé de fabrication d'un agencement de tôles (1) pour un manipulateur de grande taille (100), notamment une pompe à béton automotrice, selon l'une quelconque des revendications 1 à 6, comprenant les étapes suivantes :
- l'agencement d'une membrure supérieure (2) et d'une membrure inférieure (3) sur deux tôles d'âme (44b) simplement pliées et une autre tôle d'âme (4) doublement pliée, de telle sorte que les pliages formés (7, 7a, 7b, 7c) des tôles d'âme (4, 4a, 4b) réalisent chacun une paroi de cloison (8, 8a, 8b, 8c),
- le soudage des pliages (7, 7a, 7b, 7c) à la membrure supérieure (2) et à la membrure inférieure (3),
- l'agencement d'au moins une paroi arrière de tôle d'âme (5),
- le soudage des pliages (7, 7a, 7b, 7c) à la paroi arrière de tôle d'âme (5),
- l'agencement de couvercles de tôle d'âme (14, 14a), et
- le soudage des couvercles de tôle d'âme (14, 14a) aux tôles d'âme pliées (4, 4a, 4b) et/ou à la membrure supérieure (2) et à la membrure inférieure (3).

10. Procédé selon la revendication 9, **caractérisé en ce qu'**après le soudage du pliage (7, 7a, 7b, 7c) avec la membrure supérieure (2) et la membrure inférieure (3) et avant l'agencement de la paroi arrière de tôle d'âme (5) et/ou l'agencement du couvercle de tôle d'âme (14, 14a), une rectification des cordons de soudure (9, 9a, 9b, 9c, 11, 12) reliant la membrure supérieure (2) et la membrure inférieure (3) au pliage (7, 7a, 7b, 7c) est effectuée.

11. Procédé selon la revendication 9 ou 10, **caractérisé en ce qu'**après le soudage du pliage (7, 7a, 7b, 7c) à la paroi arrière de tôle d'âme (5) et avant l'agencement du couvercle de tôle d'âme (14, 14a), une rectification du cordon de soudure (13, 13a) reliant la paroi arrière de tôle d'âme (5) au pliage (7, 7a, 7b, 7c) est effectuée.
